(19) Europäisches Patentamt
European Patent Office
Office européen des brevets

(11) **EP 3 810 465 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **19736993.7**

(22) Anmeldetag: **18.06.2019**

(51) Internationale Patentklassifikation (IPC):
**B60T 8/88** *(2006.01)*      **B60T 17/22** *(2006.01)*

(52) Gemeinsame Patentklassifikation (CPC):
**B60T 17/226; B60T 7/042; B60T 8/4081; B60T 8/88; B60T 8/885; B60T 13/146; B60T 13/662; B60T 13/745; B60T 17/221; G01M 17/00;** B60T 8/90; B60T 2270/14; B60T 2270/403; B60T 2270/406

(86) Internationale Anmeldenummer:
**PCT/EP2019/065934**

(87) Internationale Veröffentlichungsnummer:
**WO 2020/002035 (02.01.2020 Gazette 2020/01)**

(54) **VERFAHREN ZUM ÜBERWACHEN EINES HYDRAULISCHEN BREMSSYSTEMS FÜR EIN KRAFTFAHRZEUG UND BREMSSYSTEM**

METHOD FOR MONITORING A HYDRAULIC BRAKE SYSTEM FOR A MOTOR VEHICLE AND BRAKE SYSTEM

PROCÉDÉ POUR SURVEILLER UN SYSTÈME DE FREINAGE HYDRAULIQUE POUR UN VÉHICULE À MOTEUR ET SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2018   DE 102018210310**
**31.10.2018   DE 102018218693**

(43) Veröffentlichungstag der Anmeldung:
**28.04.2021   Patentblatt 2021/17**

(73) Patentinhaber: **Continental Automotive Technologies GmbH**
**30165 Hannover (DE)**

(72) Erfinder:
• **COURTH, Christian**
**60488 Frankfurt am Main (DE)**
• **SEIDEL, Anne**
**60488 Frankfurt am Main (DE)**
• **LOHSE, Ulrich**
**60488 Frankfurt am Main (DE)**
• **NEU, Andreas**
**60488 Frankfurt am Main (DE)**
• **CASPARI, Roland**
**60488 Frankfurt am Main (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
DE-A1-102012 201 535      DE-A1-102015 106 089
DE-A1-102016 112 971      DE-A1-102016 222 578
US-A1- 2017 158 184

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Überwachen eines hydraulischen Bremssystems für ein Kraftfahrzeug sowie ein Bremssystem zur Ausführung eines solchen Verfahrens.

Von Bremssystemen, insbesondere von vakuumlosen Bremssystemen mit einer hydraulischen Rückfallebene, wird typischerweise verlangt, dass innerhalb der hydraulischen Rückfallebene ein Fahrer sein Fahrzeug mit mindestens 2,44 m/s$^2$ verzögern kann. Dabei kann die hydraulische Rückfallebene typischerweise in Form eines Tandemhauptbremszylinders oder eines Hauptbremszylinders ausgeführt sein, welcher mit jeweiligen Radbremsen an Rädern verbunden ist. Unter dem Begriff eines Hauptbremszylinders sei im Rahmen dieser Anmeldung grundsätzlich auch ein Tandemhauptbremszylinder verstanden.

Das Verzögerungsziel von 2,44 m/s$^2$ wird beispielsweise durch Auslegung des Hauptbremszylindervolumens realisiert. Luft und Leckage können jedoch die Auslegung gefährden, so dass das Verzögerungsziel nicht mehr erreicht wird. Es ist z.B. aus der DE 10 2016 222 578 A1 bekannt, das Hauptbremszylindervolumen unter Verwendung eines Diagnoseventils auf Luft und Leckage hin zu überprüfen. Dieses Diagnoseventil ist typischerweise zwischen dem Hauptbremszylinder und einem Reservoir angeordnet.

In der DE 10 2016 112 971 A1 sind weitere Diagnoseverfahren zur Feststellung der Dichtheit für eine Komponente eines Bremssystems beschrieben, die auf der Betrachtung von abgesperrten Druckmittelvolumen basieren.

Es ist eine Aufgabe der Erfindung, hierzu eine alternative, beispielsweise einfachere Ausführung vorzusehen. Dies wird erfindungsgemäß durch ein Verfahren und ein Bremssystem gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Überwachen eines hydraulischen Bremssystems für ein Kraftfahrzeug. Das Bremssystem weist einen Hauptbremszylinder mit mindestens einem Schnüffelloch, einen elektrisch betriebenen Druckerzeuger, einen Simulator, ein Simulatorventil und eine Hauptleitung auf. Es sei verstanden, dass es sich bei dem Hauptbremszylinder beispielsweise um einen Einfach-Hauptbremszylinder oder um einen TandemHauptbremszylinder handeln kann.

Der Hauptbremszylinder ist mit dem Druckerzeuger über die Hauptleitung verbunden und der Simulator ist über das Simulatorventil an der Hauptleitung zwischen Hauptbremszylinder und Druckerzeuger angeschlossen.

Das Verfahren weist folgende Schritte auf:

- Erzeugen eines Volumenstroms mittels des Druckerzeugers, wobei der Volumenstrom vom Druckerzeuger über die Hauptleitung zum Hauptbremszylinder fließt und diesen über das Schnüffelloch verlässt,
- Aufstellen einer Volumenbilanz als Differenz aus dem Volumen, welches bis zu einer bestimmten Zeit vom Druckerzeuger in die Hauptleitung abgegeben wurde, abzüglich eines Volumens, welches bis zu der bestimmten Zeit den Hauptbremszylinder über das Schnüffelloch verlassen hat, und
- Erkennen eines Zustands des Bremssystems basierend auf der Volumenbilanz oder basierend auf einem zeitlichen Verlauf der Volumenbilanz.

Es hat sich gezeigt, dass durch das Aufstellen der erwähnten Volumenbilanz und/oder deren zeitlicher Ableitung typische Fehler wie Leckagen und unerwünschte Luft in einem Hauptbremszylinder oder umgebenden Teil eines Bremssystems erkannt werden können, ohne dass hierfür die Verwendung eines Diagnoseventils erforderlich ist. Dadurch kann das Diagnoseventil eingespart werden, was Aufwand bei der Herstellung einspart und das Packaging erleichtert.

Das Bremssystem kann typischerweise weitere Komponenten beinhalten. Beispielsweise kann es Radventile wie Einlassventile und Auslassventile beinhalten. Diese können auch im Rahmen des Verfahrens vorteilhaft genutzt werden. Beispielsweise können Einlassventile geschlossen werden, damit Druckerzeuger und Hauptbremszylinder von den Rädern getrennt sind.

Das Volumen, welches bis zu der bestimmten Zeit vom Druckerzeuger in die Hauptleitung abgegeben wurde, wird gemäß einer Ausführung basierend auf Betriebsdaten des Druckerzeugers bestimmt. Beispielsweise kann anhand einer mechanischen Auslegung und anliegenden Spannungs- und/oder Stromwerten auf das abgegebene Volumen geschlossen werden.

Das Volumen, welches bis zu der bestimmten Zeit den Hauptbremszylinder über das Schnüffelloch verlassen hat, wird gemäß einer Ausführung durch zeitliche Integration eines Abflusses des Volumenstroms durch das Schnüffelloch bestimmt. Dies hat sich als exakte Möglichkeit zur Bestimmung herausgestellt.

Der Abfluss kann insbesondere basierend auf einem Blendenparameter und einem gemessenen Druck im Bremssystem oder im Hauptbremszylinder bestimmt werden.

Bevorzugt kann der Abfluss als Produkt aus Blendenparameter und der Quadratwurzel aus dem Druck; und/oder als Produkt aus Blendenparameter und Druck; und/oder als Summe aus einem Produkt aus einem ersten Blendenparameter und dem Druck einerseits und einem Produkt aus einem zweiten Blendenparameter und der Quadratwurzel aus dem Druck andererseits bestimmt werden.

Es sei erwähnt, dass bei derartigen Berechnungsangaben grundsätzlich die Regel "Punkt vor Strich" zu beachten ist.

Die eben erwähnte Vorgehensweise zur Berechnung des Abflusses hat sich für typische Anwendungsfälle als zuverlässig herausgestellt. Insbesondere wurde dabei gefunden, dass bei tiefen Temperaturen, beispielsweise <0 °C, der Abfluss durch das Produkt aus Blendenparameter und Druck berechnet werden kann. Bei höheren Temperaturen, beispielsweise >0 °C, kann der Abfluss vorteilhaft als Produkt aus Blendenparameter und Quadratwurzel des Drucks berechnet werden. Durch die Verwendung zweier separater Blendenparameter kann den unterschiedlichen Temperaturbereichen und dem jeweiligen Abflussverhalten Rechnung getragen werden, wobei beispielsweise der erste Blendenparameter und der zweite Blendenparameter temperaturabhängig ausgeführt sein können. Beispielsweise kann der erste Blendenparameter umso größer werden, je kleiner die Temperatur ist, und umgekehrt.

Soweit nachfolgend von der Bestimmung eines Blendenparameters gesprochen wird, sei verstanden, dass entsprechende Verfahren auch auf mehrere Blendenparameter erweitert werden können.

Der Blendenparameter kann insbesondere iterativ bestimmt werden. Er kann auch über ein Parameterschätzverfahren wie beispielsweise LMS (Least Mean Squares) oder RLS (Recursive Least Squares) bestimmt werden. Insbesondere kann dies derart ausgeführt werden, dass der Volumenstrom und der Abfluss im stationären Zustand gleich sind.

Der Blendenparameter kann insbesondere folgendermaßen iteriert werden:

$$\hat{c}_k \; = \; \hat{c}_{k-1} \; + \; \mu \; \times \; \left( Q_k \; - \; \hat{c}_{k-1} \; \times \; \sqrt{P_k} \right), \tag{1}$$

wobei

- $\hat{c}_k$ der Blendenparameter zum Iterationsschritt k ist,
- $\mu$ ein Iterationsparameter ist,
- $Q_k$ der Volumenstrom zum Iterationsschritt k ist, und
- $P_k$ der Druck zum Iterationsschritt k ist.

Eine derartige Vorgehensweise hat sich für typische Anwendungen als praktikables und genaues Verfahren zur Bestimmung des Blendenparameters erwiesen. Es sei verstanden, dass wie bereits weiter oben erwähnt die Abhängigkeit des Abflusses auch von der beschriebenen Funktion mit der Quadratwurzel des Drucks abweichen kann, wobei in einem solchen Fall auch die entsprechende Berechnungsvorschrift für den Blendenparameter angepasst werden kann. Beispielsweise kann auf die obige Quadratwurzel verzichtet werden, so dass der Blendenparameter $\hat{c}_{k-1}$ unmittelbar mit dem Druck $P_k$ multipliziert wird.

Der Blendenparameter wird bevorzugt bei konstantem Druck und/oder bei konstantem Volumenstrom bestimmt. Dies ermöglicht eine genaue Bestimmung des Blendenparameters, da keine Veränderungen in Druck oder Volumenstrom zu erwarten sind.

Nachfolgend werden mögliche Ausführungen beschrieben, wobei erwähnt sei, dass diese auch als Ersatz für einen Teil der zum Anmeldezeitpunkt in Anspruch 1 enthaltenen Verfahrensschritte dienen können.

Gemäß einer möglichen Ausführung wird der Volumenstrom bei geschlossenem Simulatorventil für einen Zeitraum kontinuierlich erzeugt. Basierend auf einer anfänglichen Volumenbilanz kann ein Luftvolumen im Hauptbremszylinder bestimmt werden. Dies beruht auf der Erkenntnis, dass bei Vorhandensein eines unerwünschten Luftvolumens im Hauptbremszylinder dieses zunächst komprimiert wird, was verhältnismäßig schnell erfolgt, und während des Komprimierungsvorgangs typischerweise mehr Volumen in den Hauptbremszylinder eintritt als aus ihm austritt. Es kann auch basierend auf einer Volumenbilanz über den Zeitraum eine Leckage des Simulatorventils bestimmt werden. Dies beruht auf der Erkenntnis, dass bei Auftreten einer Leckage über einen längeren Zeitraum mehr Volumen vom Druckerzeuger abgegeben wird als über das Schnüffelloch abfließt, da die Leckage für einen zusätzlichen Volumenabfluss sorgt, welcher im Rahmen der bereits beschriebenen Volumenbilanz erkannt werden kann.

Der Blendenparameter kann nach einer vorgegebenen oder bestimmten Anfangszeit im Zeitraum bestimmt werden. Es sei verstanden, dass ein bestimmter Blendenparameter dann auch für Messwerte verwendet werden kann, welche zeitlich vor der Bestimmung des Blendenparameters liegen.

Gemäß einer möglichen Ausführung wird der Volumenstrom bei offenem Simulatorventil für einen ersten Zeitraum erzeugt, wobei anschließend das Simulatorventil bei abgeschaltetem Druckerzeuger für einen zweiten Zeitraum geschlossen wird, anschließend der Volumenstrom bei offenem Simulatorventil für einen dritten Zeitraum erzeugt wird, und wiederum anschließend eine Leckage des Simulatorventils basierend auf einer Volumenbilanz im dritten Zeitraum ermittelt wird.

Diese Vorgehensweise beruht auf der Erkenntnis, dass der Simulator zunächst mittels des Volumenstroms geladen werden kann und anschließend eine Leckage durch das Simulatorventil ermittelt werden kann, indem dieses geschlossen und ein aus dem Simulator ausgetretenes Volumen detektiert wird.

Der Blendenparameter kann dabei insbesondere im ersten Zeitraum und/oder im dritten Zeitraum nach einem Aufladen des Simulators bestimmt werden. Auch die Bestimmung in beiden Zeiträumen ist möglich.

Bevorzugt ist in dem Schnüffelloch oder strömungsmäßig nach dem Schnüffelloch eine Blende angeordnet. Damit kann in definierter Weise ein Strömungsquerschnitt verringert werden, so dass ein Druck aufgebaut werden kann. Alternativ kann beispielsweise auch eine Drossel verwendet werden.

Als Druckerzeuger kann insbesondere ein Linearaktuator verwendet werden. Dies hat sich für typische Bremssysteme bewährt. Jedoch können auch andere elektrisch betriebene Vorrichtungen zum Erzeugen eines fluidischen Drucks verwendet werden.

Die Erfindung betrifft des Weiteren ein Bremssystem für ein Kraftfahrzeug. Das Bremssystem weist einen Hauptbremszylinder mit einem Schnüffelloch, einen elektrisch betriebenen Druckerzeuger, einen Simulator, ein Simulatorventil und eine Hauptleitung auf. Der Hauptbremszylinder ist mit dem Druckerzeuger über die Hauptleitung verbunden und der Simulator ist über das Simulatorventil an der Hauptleitung zwischen Hauptbremszylinder und Druckerzeuger angeschlossen.

Das Bremssystem weist ferner eine elektronische Steuerungsvorrichtung auf, welche zur Ausführung eines Verfahrens gemäß der Erfindung konfiguriert ist. Hierbei kann auf alle hierin beschriebenen Ausführungen und Varianten zurückgegriffen werden.

Weitere Merkmale und Vorteile wird der Fachmann dem nachfolgend mit Bezug auf die beigefügte Zeichnung beschriebenen Ausführungsbeispiel entnehmen. Dabei zeigen:

Fig. 1:   ein Bremssystem,
Fig. 2 bis 4:  Diagramme zu einer ersten Überprüfungsmöglichkeit,
Fig. 5 bis 7:  Diagramme zu einer zweiten Überprüfungsmöglichkeit,
Fig. 8:   ein Ablaufdiagramm zur ersten Überprüfungsmöglichkeit, und
Fig. 9:   ein Ablaufdiagramm zur zweiten Überprüfungsmöglichkeit.

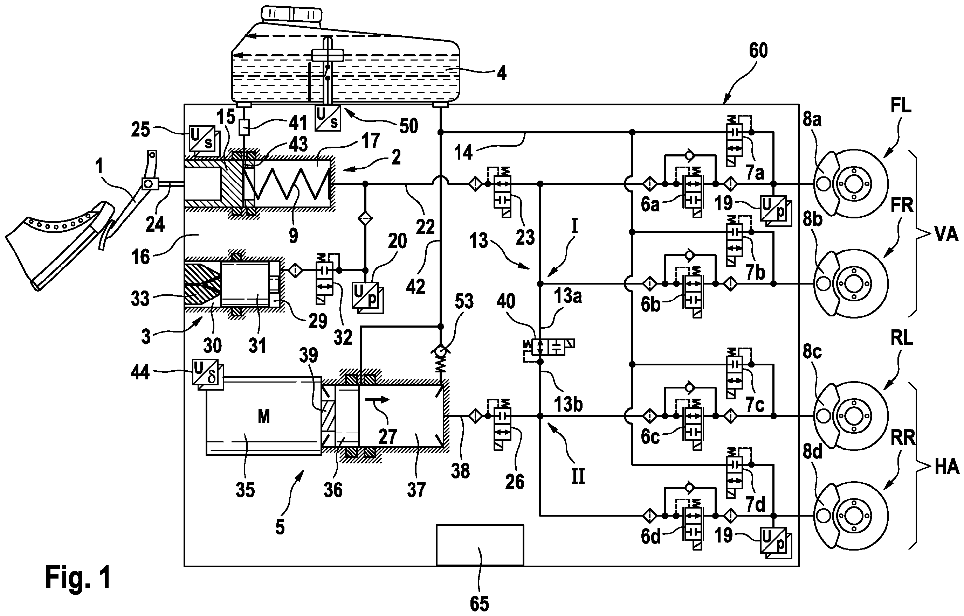

Fig. 1 zeigt ein Bremssystem gemäß einem Ausführungsbeispiel der Erfindung. Das Bremssystem ist in einem Gehäuse 60 angeordnet und weist eine lediglich schematisch dargestellte Steuerungsvorrichtung 65 zur Steuerung der nachfolgend beschriebenen Komponenten auf.

Das Bremssystem weist ein Bremspedal 1 auf, mittels welchem ein Fahrer einen Fahrerbremswunsch an das Bremssystem übergeben kann. Das Bremssystem weist einen Hauptbremszylinder 2 auf, in dessen Innenraum 17 sich ein Kolben 15 und eine Feder 9 befinden. Der Kolben 15 kann mittels des Bremspedals 1 gegen die Feder 9 bewegt werden. Seine Position wird mittels eines Sensors 25 überwacht.

Das Bremssystem weist einen Bremsflüssigkeitsbehälter 4 auf. Der Hauptbremszylinder 2 ist dabei über ein Schnüffelloch 43 mit dem Bremsflüssigkeitsbehälter 4 verbunden. Diese Verbindung erfolgt über eine Blende 41, welche den Durchfluss zwischen dem Schnüffelloch 43 und dem Bremsflüssigkeitsbehälter 4 in definierter Weise einengt.

Der Bremsflüssigkeitsbehälter 4 befindet sich auf einer Oberseite 50 des Gehäuses 60.

Das Bremssystem weist einen Simulator 3 auf. In dessen Innenraum 30 befinden sich ein Simulatorkolben 31 und eine Feder 33. Der Simulator 3 ist über ein Simulatorventil 32 mit dem Hauptbremszylinder 2 verbunden. Bei offenem Simulatorventil 32 kann ein von dem Kolben 15 im Hauptbremszylinder 2 verdrängtes Volumen unmittelbar in den Simulator 3 geleitet werden und dort in einem der Feder 33 gegenüberliegenden Raum 29 aufgenommen werden. Dadurch wird der Simulatorkolben 31 gegen die Feder 33 gedrückt, was ein realistisches Bremsgefühl für den Fahrer erzeugt.

Ein am Hauptbremszylinder 2 anliegender Druck kann mittels eines Drucksensors 20 gemessen werden.

Das Bremssystem weist einen Druckerzeuger 5 auf, welcher wiederum einen Motor 35 aufweist, der einen Aktuatorkolben 36 in einem Innenraum 37 bewegen kann. Zur Druckerzeugung wird der Aktuatorkolben 36 dabei entsprechend dem Pfeil 27 bewegt. Zum Antrieb des Aktuatorkolbens 36 durch den Motor 35 dient ein Rotations-Translations-Getriebe 39. Der Druckerzeuger 5 ist somit als Linearaktuator ausgebildet. Er ist über ein Rückschlagventil 53 mit dem Bremsflüssigkeitsbehälter 4 über eine Ansaugleitung 42 verbunden.

Vom Hauptbremszylinder 2 geht eine Hauptleitung 22 ab, welche über ein erstes Zwischenventil 23 und ein zweites Zwischenventil 40 sowie Zwischenverbindungsleitungen 13a, 13b mit zwei Knoten I, II sowie mit weiter unten zu beschreibenden Radventilen verbunden ist. Der Druckerzeuger 5 ist über ein drittes Zwischenventil 26 ebenfalls mit den Knoten I, II sowie mit den Radventilen verbunden. Das erste Zwischenventil 23 kann auch als Trennventil bezeichnet werden.

Bei den Radventilen handelt es sich um Einlassventile 6a, 6b, 6c, 6d sowie Auslassventile 7a, 7b, 7c, 7d, welche mit Bremsen 8a, 8b, 8c, 8d verbunden sind. Diese Bremsen 8a, 8b, 8c, 8d sind jeweiligen Rädern zugeordnet, wobei eine erste Bremse 8a einem vorderen linken (FL) Rad zugeordnet ist, eine zweite Bremse 8b einem vorderen rechten (FR) Rad zugeordnet ist, eine dritte Bremse 8c einem hinteren linken (RL) Rad zugeordnet ist und eine vierte Bremse 8d einem hinteren rechten (RR) Rad zugeordnet ist. Das vordere linke Rad und das vordere rechte Rad sind an einer Vorderachse (VA) montiert. Das hintere linke Rad und das hintere rechte Rad sind an einer Hinterachse (HA) montiert.

Grundsätzlich ist es möglich, während eines normalen Bremsvorgangs mittels des ersten Zwischenventils 23 den Hauptbremszylinder 2 von den Einlassventilen 6a, 6b, 6c, 6d abzutrennen und den von einem Fahrer erzeugten Druck ausschließlich über ein geöffnetes Simulatorventil 32 an den Simulator 3 zu leiten. Ein Fahrerbremswunsch wird dabei mittels des bereits erwähnten Wegsensors 25 erfasst und mittels Druckerzeugung durch den Druckerzeuger 5 umgesetzt. Eine weitergehende Funktionalität kann dabei ebenfalls implementiert werden, beispielsweise kann über die Auslassventile 7a, 7b, 7c, 7d, welche über eine Rücklaufleitung 14 mit dem Bremsflüssigkeitsbehälter 4 verbunden sind, eine Antiblockiersystem(ABS)-Funktion realisiert werden.

Ein Druck im Bremssystem kann über zusätzliche Drucksensoren 19 überwacht werden.

Es sei verstanden, dass bei typischen Ausführungen gemäß dem Stand der Technik statt der bereits erwähnten Blende 41 ein Diagnoseventil eingebaut wäre. Dieses ist schaltbar ausgeführt und kann dazu dienen, den Hauptbremszylinder 2 von dem Bremsflüssigkeitsbehälter 4 zu trennen. In diesem Fall kann bei Anforderung eines konstanten Motor-Moments des Elektromotors 35 ein konstanter Druck im Hauptbremszylinder 2 erzeugt werden und es kann ein Fehlermaß für Luft und Leckage direkt über das verschobene Volumen im Linearaktuator 5 gebildet werden, denn das verschobene Volumen entspricht dem notwendigen Volumen zur Kompression einer Luftblase und dem über die Zeit wachsenden Leckage-Volumen.

Bei der hierin beschriebenen Ausführung wird das gemäß dem Stand der Technik vorgesehene Diagnoseventil durch einen hydraulischen Widerstand, vorliegend in Form der Blende 41, ersetzt. Der Prüfdruck ist dabei nicht statisch, sondern wird dynamisch in Form eines Staudrucks erzeugt. Ein Fehlermaß kann dabei typischerweise nicht über das verschobene Volumen im Druckerzeuger 5, sondern über eine Volumenbilanz im Hauptbremszylinder 2 gewonnen werden. Statt einer Blende 41 kann beispielsweise auch eine Drossel verwendet werden. Es ist auch zulässig, dass der hydraulische Widerstand über verschiedene Bremssysteme streut. Der hydraulische Widerstand sollte lediglich für den benötigten Staudruck ausreichend groß sein.

Es sei erwähnt, dass in einer alternativen Lösung beispielsweise eine Verbindung zwischen Hauptbremszylinder 2 und Bremsflüssigkeitsbehälter 4 auf einen hydraulischen Widerstand hin optimiert werden kann, beispielsweise durch eine Änderung der Schnüffelloch-Bohrungen. Im Folgenden soll für eine einfachere Diskussion angenommen werden, dass es sich wie bereits erwähnt um eine Blende 41 handelt.

Ein Staudruck kann erzeugt werden, indem der Aktuatorkolben 36 vom Motor 35 in Richtung seiner Volumenverdrängung verschoben wird. Die bereits erwähnten Ventile sind dabei so geschaltet, dass das vom Aktuatorkolben 36 verdrängte Volumen unmittelbar in den Hauptbremszylinder 2 gelangt. Hierzu werden insbesondere die drei Zwischenventile 23, 26, 40 geöffnet und die Einlassventile 6a, 6b, 6c, 6d geschlossen. Solange der Aktuatorkolben 36 verschoben wird, fließt Volumen über die Blende 41 ab und generiert einen für den Volumenfluss ursächlichen Staudruck.

Weil Volumen ständig über die Blende 41 abfließt, kann das verdrängte Volumen nicht direkt als Fehlermaß genutzt werden. Stattdessen wird eine Volumenbilanz über die Summe des zufließenden Volumenstroms $Q_k^{Plunger}$ und des über die Blende abfließenden Volumenstroms $Q_k^{Blende}$ gebildet. Zu einem Abtastzeitpunkt k und für eine Abtastzeit T kann eine Volumenbilanz $V_k$ folgendermaßen berechnet werden:

$$V_k = \sum T \times Q_k^{Plunger} - \sum T \times Q_k^{Blende}. \qquad (2)$$

Eine positive Volumenbilanz $V_k$ gibt Volumen wieder, welches zwar in den Hauptbremszylinder 2 oder zumindest in Richtung zu diesem geflossen, aber nicht in den Bremsflüssigkeitsbehälter 4 abgeflossen ist. Es kann - wie später gezeigt wird - als Fehlermaß zur Erkennung von Luft und Leckage genutzt werden. Der Volumenstrom $Q_k^{Blende}$ ist keine Messgröße und kann für einen Hauptbremszylinderdruck P über die Blendengleichung mit einem Blendenparameter $c_k$ abgeschätzt werden:

$$Q_k^{Blende} = c_k \times \sqrt{P_k}. \qquad (3)$$

Wie bereits weiter oben erwähnt, kann je nach Temperaturbereich auch die folgende Formel zur Anwendung kommen:

$$Q_k^{Blende} = c_k \times P_k. \qquad (4)$$

Da der Blendenparameter $c_k$ des hydraulischen Widerstands stark über Anlage und Temperatur streut, kann der Blendenparameter $c_k$ über ein Identifikationsverfahren geschätzt werden. Im Weiteren kann hierzu beispielsweise ein Least-Means-Squares-Algorithmus (LMS) genutzt werden:

$$\hat{c}_k = \hat{c}_{k-1} + \mu \times \left( Q_k - \hat{c}_{k-1} \times \sqrt{P_k} \right). \qquad (5)$$

Auf diese Formel wird nachfolgend insbesondere als Formel zur Blendenschätzung Bezug genommen.

Damit der geschätzte Blendenparameter $\hat{c}_k$ gegen den wahren Wert des hydraulischen Widerstands konvergiert, soll der Staudruck stationär eingeschwungen sein. Der Simulator 3 und der Hauptbremszylinder 2 nehmen dabei kein weiteres Volumen mehr auf und das vom Kolben 36 verschobene Volumen fließt komplett über den hydraulischen Widerstand in Form der Blende 41 ab. Die Volumenbilanz soll daher im Folgenden zeitlich von der Blendenschätzung getrennt werden, so dass das Volumen auf Basis eines bereits konvergierten Blendenparameters $\hat{c}_{converged}$ bilanziert wird:

$$V_k = \sum T \times Q_k^{Plunger} - \hat{c}_{converged} \times \sum T \times \sqrt{P_k} . (6)$$

Auf diese Formel wird nachfolgend insbesondere als Formel zur Volumenbilanz Bezug genommen.

Auf Basis der obigen Grundidee wird nun nachfolgend anhand zweier Überprüfungsmöglichkeiten beschrieben, wie Luft im Hauptbremszylinder und eine Leckage über das Simulatorventil geschätzt werden können. Zur Vereinfachung sei dabei das Volumen des Druckerzeugers 5 als nicht erschöpfbar angenommen.

Erste Überprüfungsmöglichkeit

Für die Luft- und Leckageerkennung wird zunächst der Simulator 3 durch Schließen des Simulatorventils 32 vom Hauptbremszylinder 2 getrennt und über den Druckerzeuger 5 ein konstanter Volumenstrom erzeugt. Der im Hauptbremszylinder 2 entstehende Staudruck komprimiert eine eventuell vorhandene Luftblase. Die Volumenbilanz nach der obigen Formel (6) erfasst die zusätzliche Volumenaufnahme und entspricht grob dem Volumen der Luftblase.

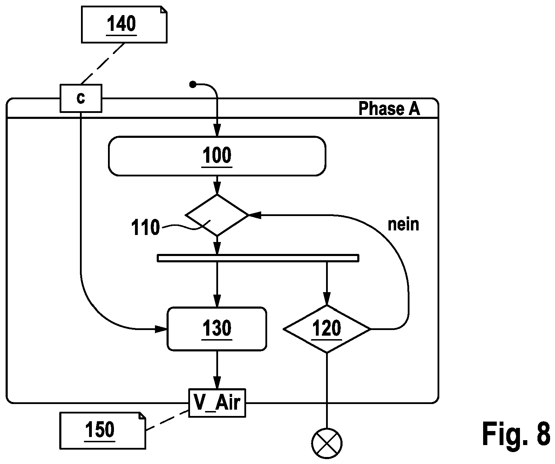

Zur Veranschaulichung wurde ein entsprechender Algorithmus gemäß Fig. 8 implementiert und für eine Anlage nach Fig. 1 mit einer Luftblase im Hauptbremszylinder 2 simuliert. Die Luftblase hatte dabei ein Volumen von 2 cm$^3$ bei Atmosphärendruck.

Gemäß dem in Fig. 8 dargestellten Verfahrensablauf wird dabei zunächst im Block 100 ein konstanter staudruckgenerierender Plungervolumenstrom bei geschlossenem Simulatorventil 32 erzeugt. Hierzu wird der Druckerzeuger 5 verwendet.

In den Rauten 110, 120 wird überprüft, ob der Staudruck stationär ist. Solange dies nicht der Fall ist, werden die entsprechenden Entscheidungsprozesse wiederholt.

Bei stationärem Staudruck wird in dem Block 130 die Volumenbilanz gemäß der obigen Formel (6) iteriert. Hierzu werden Blendenparameter c verwendet, welche aus einer in Block 140 realisierten Blendenparameterschätzung stammen.

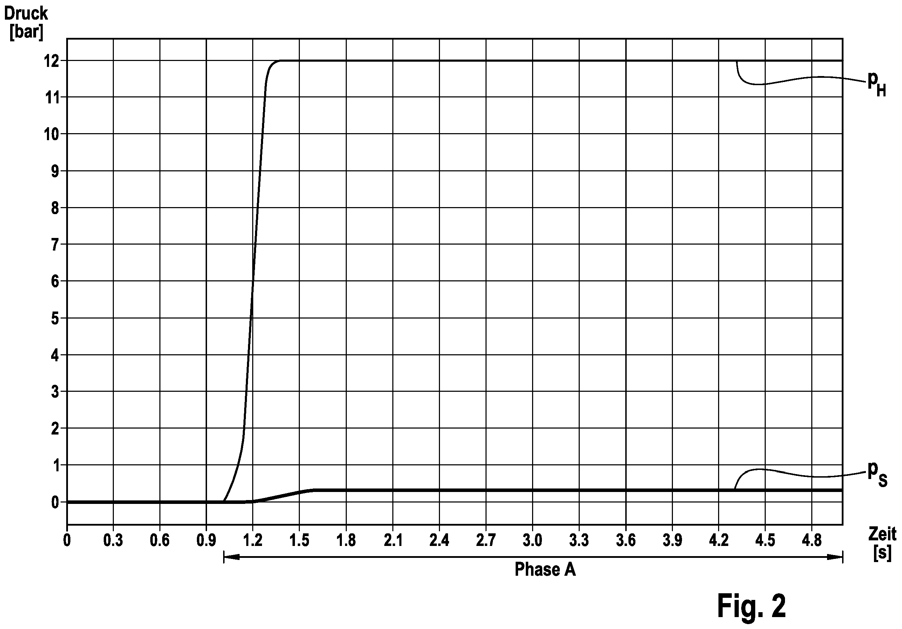

Wenn der Volumenstrom iteriert wurde, kann das Volumen der Luftblase bei Atmosphärendruck V_Air bestimmt werden, wie dies weiter unten mit Bezug auf die Fig. 2, 3 und 4 näher erläutert werden wird. Als Endergebnis kann beispielsweise im Block 150 eine Volumenbilanz in Form eines Luftvolumens ausgegeben werden.

In Fig. 8 ist dabei eine Phase A wiedergegeben, welche auch in den nachfolgend beschriebenen Figuren 2, 3 und 4 eingezeichnet ist.

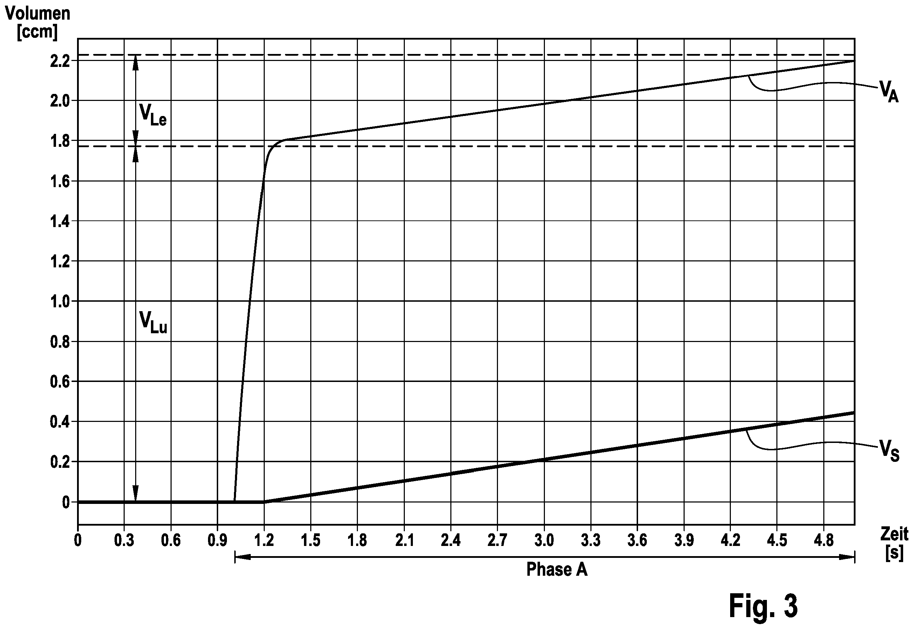

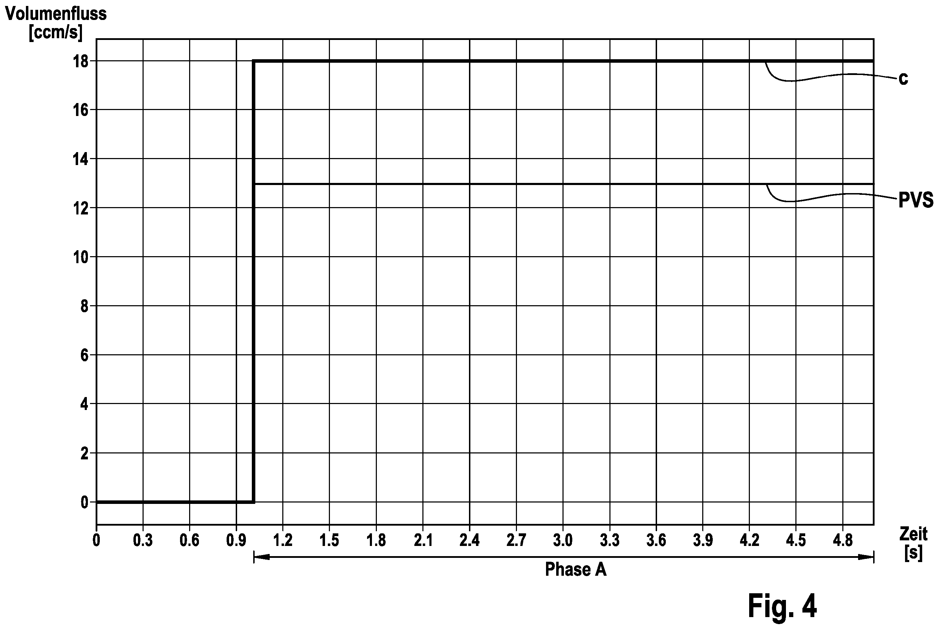

Die entsprechenden Ergebnisse sind in Fig. 2, Fig. 3 und Fig. 4 dargestellt. Dabei zeigt Fig. 2 den zeitlichen Verlauf von Drücken, Fig. 3 den zeitlichen Verlauf von Volumina und Fig. 4 den zeitlichen Verlauf von Volumenflüssen und dem Blendenparameter.

In Fig. 2 ist zu sehen, dass der Druck $p_H$ im Hauptzylinder 2 nach Beginn der Druckbeaufschlagung (also in Phase A) ansteigt, wobei zunächst das Luftvolumen überwunden werden muss. Erst etwas danach baut sich ein Druck ps im Simulator 3 auf, welcher durch eine Leckage im Simulatorventil bedingt ist.

Fig. 3 zeigt eine Volumenbilanz $V_A$ in Form eines Aufladevolumens des Hauptbremszylinders 2 sowie ein Volumen Vs des Simulators 3. Wie in Fig. 3 zu sehen ist, wird Luft nach 200 ms von der Volumenbilanz auf 1,8 cm$^3$ bestimmt. Dies entspricht dem eingezeichneten Luftvolumen $V_{Lu}$. Nach 1,2 s steigt die Volumenbilanz $V_A$ weiter an. Grund hierfür ist eine Leckage von 10 mm$^3$/s/bar über das Simulatorventil 32 von dem Hauptbremszylinder 2 zum Simulator 3 hin. Dies wird als Auflade-Volumen bezeichnet und entspricht dem eingezeichneten Leckage bedingen Volumen $V_{Le}$.

Der in Fig. 4 dargestellte Volumenfluss aus dem Druckerzeuger (PlungerVolumenstrom PVS) bleibt bei dieser Vorgehensweise konstant, ebenso wie der ebenfalls eingezeichnete Blendenparameter c.

Es ist somit ersichtlich, dass auch ohne ein Diagnoseventil eine Erkennung von Luft und Leckage möglich ist. Insbesondere kann ein Luftvolumen V_Air unter Verwendung von V_Lu im Hauptbremszylinder 2 erkannt werden, welches einen Hinweis auf unerwünschte Luft gibt, die eine Bremsverzögerung beeinträchtigen könnte.

Es kann auf das Volumen der Luftblase V_Air über V_Lu unter Annahme eines adiabatischen Prozesses geschlossen werden. Es gilt dabei die Beziehung

$$V\_air * 1\ bar = (V\_Air - V\_lu) * (p\_H + 1\ bar).$$

Für das Beispiel mit V_lu = 1,8 cm$^3$ und einem stationären Staudruck im Hauptzylinder von p_H = 11,9 bar ergibt sich V_Air zu 1,95 cm$^3$ und damit ein dem Volumen der simulierten Luftblase bei Atmosphärendruck entsprechender Wert.

Zweite Überprüfungsmöglichkeit

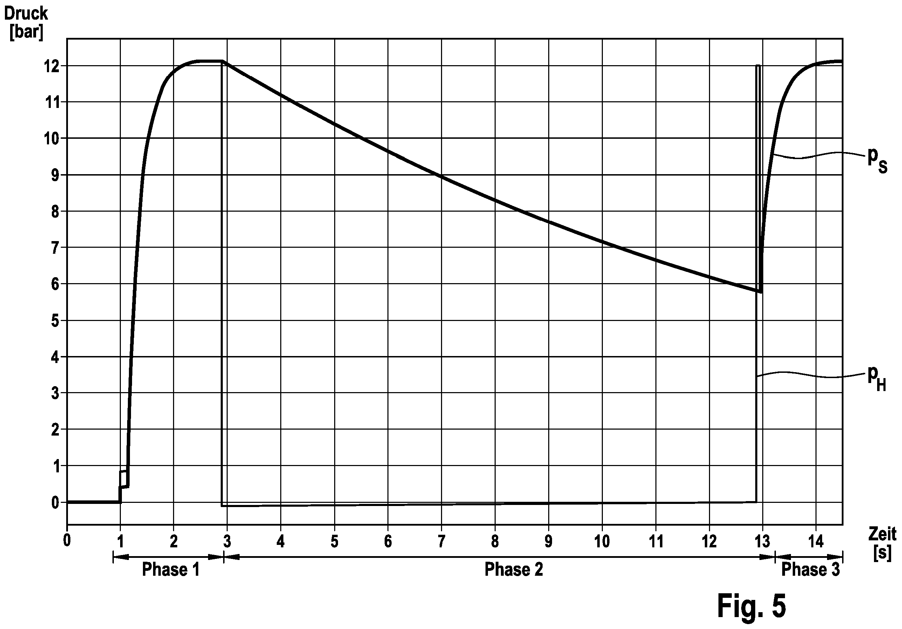

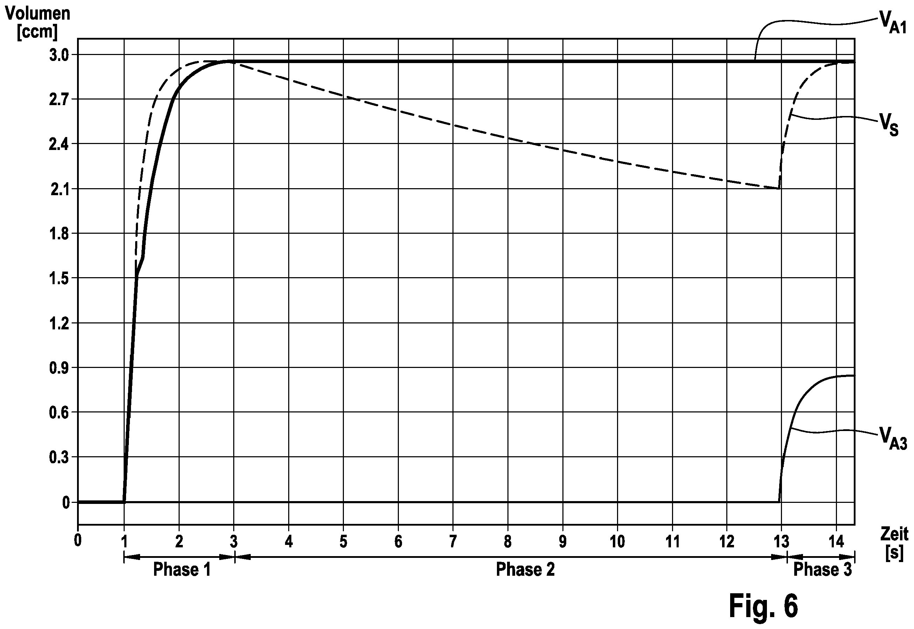

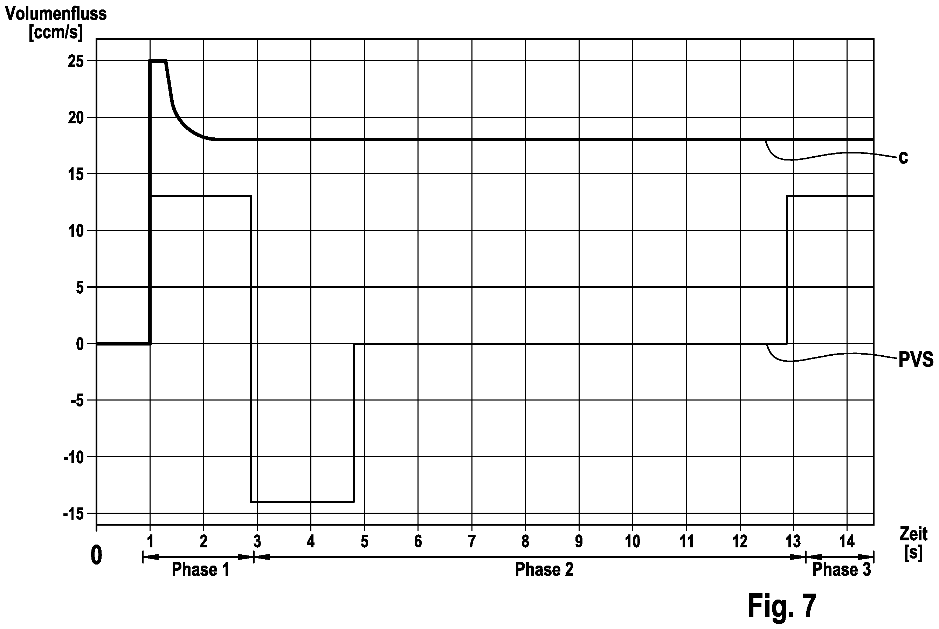

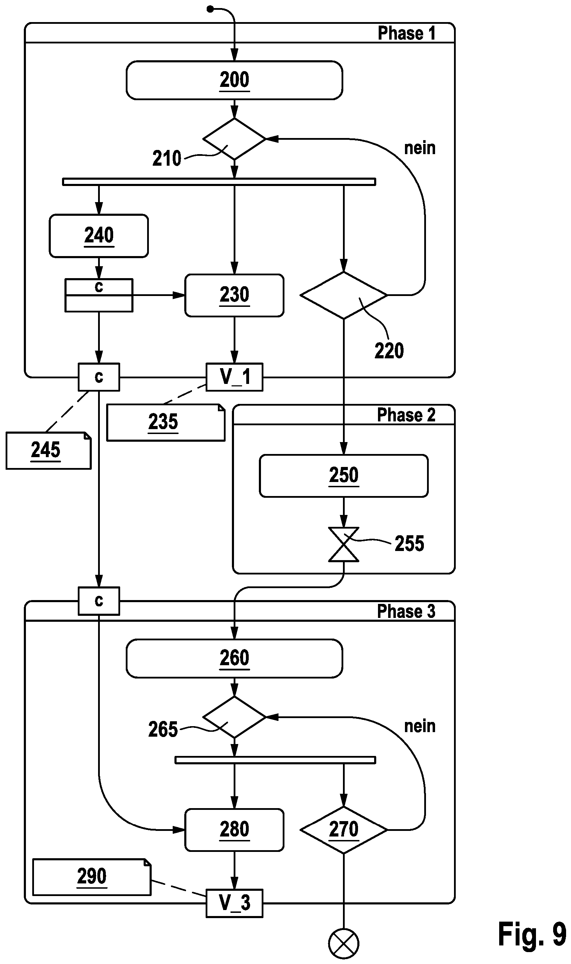

Eine weitere Ausführung gemäß dem Ablaufdiagramm von Fig. 9 wurde simuliert und die Ergebnisse in den Fig. 5 bis 7 dargestellt. Fig. 5 zeigt dabei einen zeitlichen Verlauf von Drücken. Fig. 6 zeigt einen zeitlichen Verlauf von Volumina und Fig. 7 zeigt einen zeitlichen Verlauf von Volumenflüssen und dem Blendenparameter.

Entsprechend dem in Fig. 9 dargestellten Verfahrensablauf ist der beschriebene Vorgang in drei Phasen unterteilt, nämlich eine Phase 1, eine Phase 2 und eine Phase 3. Diese sind jeweils oben rechts in jeweiligen zusammenfassenden Kästchen angegeben.

Im Block 200 wird zunächst ein konstanter staudruckgenerierender Plungervolumenstrom bei offenem Simulatorventil 32 erzeugt. Hierzu dient wiederum der Druckerzeuger 5.

In den Rauten 210, 220 wird überprüft, ob der Staudruck stationär ist. Solange dies nicht der Fall ist, werden die entsprechenden Entscheidungsprozesse wiederholt. Bei stationärem Staudruck wird im Block 230 eine Volumenbilanz entsprechend der obigen Formel (6) iteriert. Die hierfür erforderlichen Blendenparameter c werden in einem eigenen Block 240 erzeugt, wobei die obige Formel (5) zum Blendenschätzen iteriert wird.

Als Ergebnis wird ein erstes Volumen V_1 ausgegeben. Im Block 245 werden dabei die Blendenparameter c als Ergebnis festgehalten. Im Block 235 wird als Ergebnis im Rahmen einer Volumenbilanz ein Aufladevolumen V_1 im Simulator aus der Phase 1 festgehalten.

In Phase 2 wird anschließend in Block 250 der staudruckgenerierende Plungervolumenstrom abgeschaltet. Das Simulatorventil 32 wird dabei geschlossen.

Anschließend wird in einer Warteschleife 255 eine Wartezeit von vorliegend 10 s eingefügt, in welcher kein Plungervolumenstrom erzeugt wird und kein Ventil betätigt wird. In dieser Zeit tritt Flüssigkeit aus dem Simulator 3 allein aufgrund von Leckage durch das Simulatorventil 32 aus. Der Simulator 3 wird auf diese Weise entladen.

Anschließend fährt der Prozess mit Phase 3 fort. Dabei wird zunächst in Block 260 wiederum ein konstanter, staudruckgenerierender Plungervolumenstrom bei zunächst noch geschlossenem Simulatorventil 32 unter Verwendung des Druckerzeugers 5 erzeugt. In Rauten 265, 270 wird wiederum überprüft, ob der Staudruck stationär ist. Wenn dies der Fall ist, wird das Simulatorventil 32 geöffnet und die Volumenbilanz entsprechend der obigen Formel (6) iteriert. Als Ergebnis wird ein Volumen V_3 ausgegeben. Im Block 290 wird als Ergebnis der Phase 3 das Aufladevolumen V_3 im Simulator 3 festgehalten.

In Phase 1 wird der Simulator 3 vollständig aufgeladen. In Phase 2 entlädt sich der Simulator aufgrund von Leckage. In Phase 3 wird der Simulator um dasjenige Volumen wieder geladen, welches er in Phase 2 aufgrund von Leckage verloren hat. Die Differenz der beiden ermittelten Volumina V_1, V_3 ist somit umso größer, je größer die Leckage durch das Simulatorventil 32 ist. Auf diese Weise kann eine Prüfung des Simulatorventils 32 auf Dichtigkeit erfolgen.

Zur Veranschaulichung wurde eine Simulation für eine Anlage gemäß Fig. 1 mit einer Leckage in Höhe von 0,01 cm$^3$/s über das Simulatorventil 32 simuliert. Die Ergebnisse werden nachfolgend beschrieben.

Es sei bei dieser Ausführung angenommen, dass die Leckage über das Simulatorventil 32 unabhängig von der Durchflussrichtung ist. In diesem Fall kann bei offenem Simulatorventil der Simulator 3 über den Staudruck zuerst aufgeladen werden (Phase 1). Die Aufladung erfolgt solange, bis der Staudruck stationär eingeschwungen ist und der Blendenparameter gemäß der obigen Formel (5) stabil geschätzt wurde. Der Druck ps im Simulator 3 erhöht sich dabei, wie in Fig. 5 zu sehen ist. Der Druck $p_H$ im Hauptzylinder 2 erhöht sich ebenfalls. Wie in Fig. 6 zu sehen ist erhöhen sich auch das Volumen Vs im Simulator 3 und eine Volumenbilanz $V_{A1}$ in Form eines Aufladevolumens im Simulator 3 der Phase 1.

Anschließend wird das Simulatorventil 32 geschlossen und der Aktuatorkolben 36 wird angehalten (Phase 2). Innerhalb dieser Zeit fließt Leckagevolumen vom Simulator 3 zum Bremsflüssigkeitsbehälter 4 hin. Der Simulator 3 entlädt sich also, Druck ps und Volumen Vs im Simulator 3 fallen ab, wie in Fig. 5 und 6 zu sehen ist.

Zum Schluss wird das Simulatorventil 32 wieder geöffnet und der Simulator 3 über den Staudruck aufgeladen (Phase 3). Damit erhöht sich das Volumen Vs im Simulator 3 wieder und außerdem erhöht sich eine Volumenbilanz $V_{A3}$ in Form eines Aufladevolumens im Simulator 3 der Phase 3.

Das in Phase 2 geflossene Leckagevolumen entspricht einer Volumenbilanz gemäß der obigen Formel (6), welches das Volumen innerhalb der Phase 3 bilanziert. Dies ist in Fig. 6 zu erkennen.

Fig. 6 zeigt dass das bilanzierte Volumen innerhalb der Phase 3 dem Leckagevolumen während der Phase 2 entspricht. Anders ausgedrückt hat sich der Simulator 3 in Phase 2 aufgrund von Leckage entladen und wird nunmehr in Phase 3 wieder aufgeladen, was anhand einer Volumenbilanz gemessen werden kann.

Auf eine Phase 3 kann - bis auf das Öffnen des Simulatorventils 32 - grundsätzlich verzichtet werden, wenn die Volumenaufnahme des Simulators 3 für den Hauptbremszylinderdruck am Beginn der Phase 3 bekannt ist. Das Leckagevolumen ergibt sich dann aus der Differenz zur Volumenbilanz der Phase 1. Die Volumenaufnahme des Simulators 3 über Hauptbremszylinderdruck kann in Phase 1 gewonnen werden, wenn das bilanzierte Volumen zum Hauptbremszylinderdruck in Beziehung gesetzt wird.

Durch die beschriebenen Ausführungen kann insbesondere auf ein Diagnoseventil verzichtet werden und somit kann entsprechender Material- und Fertigungsaufwand eingespart werden. Dies ermöglicht eine günstigere Fertigung des Bremssystems und sorgt überdies für eine geringere Wartungsanfälligkeit.

## Patentansprüche

1. Verfahren zum Überwachen eines hydraulischen Bremssystems für ein Kraftfahrzeug,

   - wobei das Bremssystem folgendes aufweist:

      - einen Hauptbremszylinder (2) mit mindestens einem Schnüffelloch,
      - einen elektrisch betriebenen Druckerzeuger (5),
      - einen Simulator (3),
      - ein Simulatorventil (32), und
      - eine Hauptleitung (22),

   - wobei der Hauptbremszylinder (2) mit dem Druckerzeuger (5) über die Hauptleitung (22) verbunden ist und der Simulator (3) über das Simulatorventil (32) an der Hauptleitung (22) zwischen Hauptbremszylinder (2) und Druckerzeuger (5) angeschlossen ist,
   **dadurch gekennzeichnet, dass** das Verfahren folgende Schritte aufweist:

      - Erzeugen eines Volumenstroms mittels des Druckerzeugers (5), wobei der Volumenstrom vom Druckerzeuger (5) über die Hauptleitung (22) zum Hauptbremszylinder (2) fließt und diesen über das Schnüffelloch (43) verlässt,
      - Aufstellen einer Volumenbilanz als Differenz aus dem Volumen, welches bis zu einer bestimmten Zeit vom Druckerzeuger (5) in die Hauptleitung (22) abgegeben wurde, abzüglich eines Volumens, welches bis zu der bestimmten Zeit den Hauptbremszylinder (2) über das Schnüffelloch (43) verlassen hat, und
      - Erkennen eines Zustands des Bremssystems basierend auf der Volumenbilanz oder basierend auf einem zeitlichen Verlauf der Volumenbilanz.

2. Verfahren nach Anspruch 1,

   - wobei das Volumen, welches bis zu der bestimmten Zeit vom Druckerzeuger (5) in die Hauptleitung (22) abgegeben wurde, basierend auf Betriebsdaten des Druckerzeugers (5) bestimmt wird.

3. Verfahren nach einem der vorhergehenden Ansprüche,

   - wobei das Volumen, welches bis zu der bestimmten Zeit den Hauptbremszylinder (2) über das Schnüffelloch (43) verlassen hat, durch zeitliche Integration eines Abflusses des Volumenstroms durch das Schnüffelloch (43) bestimmt wird.

4. Verfahren nach Anspruch 3,

- wobei der Abfluss basierend auf einem Blendenparameter und einem gemessenen Druck im Bremssystem oder im Hauptbremszylinder (2) bestimmt wird.

5. Verfahren nach Anspruch 4,

- wobei der Abfluss

als Produkt aus Blendenparameter und der Quadratwurzel aus dem Druck; und/oder
als Produkt aus Blendenparameter und Druck; und/oder
als Summe aus einem Produkt aus einem ersten Blendenparameter und dem Duck einerseits und einem Produkt aus einem zweiten Blendenparameter und der Quadratwurzel aus dem Druck andererseits bestimmt wird.

6. Verfahren nach einem der Ansprüche 4 oder 5,

- wobei der Blendenparameter iterativ bestimmt wird; und/oder
- wobei der Blendenparameter über ein Parameterschätzverfahren bestimmt wird, so dass der Volumenstrom und der Abfluss im stationären Zustand gleich sind.

7. Verfahren nach Anspruch 6,

- wobei der Blendenparameter folgendermaßen iteriert wird:

$$\hat{c}_k = \hat{c}_{k-1} + \mu \times \left( Q_k - \hat{c}_{k-1} \times \sqrt{P_k} \right)$$

wobei:

- $\hat{c}_k$ der Blendenparameter zum Iterationsschritt k ist,
- $\mu$ ein Iterationsparameter ist,
- $Q_k$ der Volumenstrom zum Iterationsschritt k ist, und
- $P_k$ der Druck zum Iterationsschritt k ist.

8. Verfahren nach einem der Ansprüche 6 oder 7,

- wobei der Blendenparameter bei konstantem Druck und/oder konstantem Volumenstrom bestimmt wird.

9. Verfahren nach einem der vorhergehenden Ansprüche,

- wobei der Volumenstrom bei geschlossenem Simulatorventil (32) für einen Zeitraum kontinuierlich erzeugt wird;
- wobei basierend auf einer anfänglichen Volumenbilanz ein Luftvolumen im Hauptbremszylinder (2) bestimmt wird,
und/oder
- wobei basierend auf einer Volumenbilanz über den Zeitraum eine Leckage des Simulatorventils (32) bestimmt wird.

10. Verfahren nach Anspruch 9 sowie nach Anspruch 4 oder einem davon abhängigen Anspruch,

- wobei der Blendenparameter nach einer vorgegebenen oder bestimmten Anfangszeit im Zeitraum bestimmt wird.

11. Verfahren nach einem der vorhergehenden Ansprüche,
welches folgende Schritte aufweist:

- Erzeugen des Volumenstroms bei offenem Simulatorventil (32) für einen ersten Zeitraum, anschließend
- Schließen des Simulatorventils (32) bei abgeschaltetem Druckerzeuger (5) für einen zweiten Zeitraum, anschließend
- Erzeugen des Volumenstroms bei offenem Simulatorventil (32) für einen dritten Zeitraum, und

- Ermitteln einer Leckage des Simulatorventils (32) basierend auf einer Volumenbilanz im dritten Zeitraum.

**12.** Verfahren nach Anspruch 11,

- wobei der Blendenparameter in dem ersten Zeitraum und/oder in dem dritten Zeitraum nach einem Aufladen des Simulators (3) bestimmt wird.

**13.** Verfahren nach einem der vorhergehenden Ansprüche,

- wobei in dem Schnüffelloch (43) oder strömungsmäßig nach dem Schnüffelloch (43) eine Blende (41) angeordnet ist.

**14.** Verfahren nach einem der vorhergehenden Ansprüche,

- wobei als Druckerzeuger (5) ein Linearaktuator verwendet wird.

**15.** Bremssystem für ein Kraftfahrzeug, welches folgendes aufweist:

- einen Hauptbremszylinder (2) mit einem Schnüffelloch (43),
- einen elektrisch betriebenen Druckerzeuger (5),
- einen Simulator (3),
- ein Simulatorventil (32), und
- eine Hauptleitung (22),
- wobei der Hauptbremszylinder (2) mit dem Druckerzeuger (5) über die Hauptleitung (22) verbunden ist und der Simulator (3) über das Simulatorventil (32) an der Hauptleitung (22) zwischen Hauptbremszylinder (2) und Druckerzeuger (5) angeschlossen ist,
**dadurch gekennzeichnet, dass** das Bremssystem ferner eine elektronische Steuerungsvorrichtung (65) aufweist, welche zur Ausführung eines Verfahrens nach einem der vorhergehenden Ansprüche konfiguriert ist.

## Claims

**1.** Method for monitoring a hydraulic brake system for a motor vehicle,

- wherein the brake system has the following:

  - a master brake cylinder (2) with at least one breather hole,
  - an electrically operated pressure generator (5),
  - a simulator (3),
  - a simulator valve (32), and
  - a main line (22),

- wherein the master brake cylinder (2) is connected to the pressure generator (5) via the main line (22) and the simulator (3) is connected via the simulator valve (32) to the main line (22) between master brake cylinder (2) and pressure generator (5),
**characterized in that** the method comprises the following steps:

  - generating a volume flow by means of the pressure generator (5), wherein the volume flow flows from the pressure generator (5) via the main line (22) to the master brake cylinder (2) and exits the latter via the breather hole (43),
  - establishing a volume balance as the difference between the volume that has been discharged from the pressure generator (5) into the main line (22) up to a particular time minus a volume that has exited the master brake cylinder (2) via the breather hole (43) up to the particular time, and
  - identifying a state of the brake system on the basis of the volume balance or on the basis of a profile with respect to time of the volume balance.

**2.** Method according to Claim 1,

- wherein the volume that has been discharged from the pressure generator (5) into the main line (22) up to the particular time is determined on the basis of operating data of the pressure generator (5).

3. Method according to either of the preceding claims,

   - wherein the volume that has exited the master brake cylinder (2) via the breather hole (43) up to the particular time is determined by integration of an outflow of the volume flow through the breather hole (43) over time.

4. Method according to Claim 3,

   - wherein the outflow is determined on the basis of an aperture parameter and a measured pressure in the brake system or in the master brake cylinder (2).

5. Method according to Claim 4,

   - wherein the outflow is determined

      as a product of aperture parameter and the square root of the pressure; and/or
      as a product of aperture parameter and pressure; and/or
      as a sum of a product of a first aperture parameter and the pressure, on the one hand, and a product of a second aperture parameter and the square root of the pressure, on the other hand.

6. Method according to either of Claims 4 and 5,

   - wherein the aperture parameter is determined iteratively; and/or
   - wherein the aperture parameter is determined by means of a parameter estimation method, such that the volume flow and the outflow are equal in the steady state.

7. Method according to Claim 6,

   - wherein the aperture parameter is iterated as follows:

$$\hat{c}_k \; = \; \hat{c}_{k-1} \; + \; \mu \; \times \; \left( Q_k \; - \; \hat{c}_{k-1} \; \times \; \sqrt{P_k} \right)$$

   where:

      - $\hat{c}_k$ is the aperture parameter at the iteration step k,
      - $\mu$ is an iteration parameter,
      - $Q_k$ is the volume flow at the iteration step k, and
      - $P_k$ is the pressure at the iteration step k.

8. Method according to either of Claims 6 and 7,

   - wherein the aperture parameter is determined in the presence of constant pressure and/or constant volume flow.

9. Method according to any of the preceding claims,

   - wherein the volume flow is generated continuously for a period of time with the simulator valve (32) closed;
   - wherein an air volume in the master brake cylinder (2) is determined on the basis of an initial volume balance, and/or
   - wherein a leakage of the simulator valve (32) is determined on the basis of a volume balance over the period of time.

10. Method according to Claim 9 and according to Claim 4 or any claim dependent thereon,

   - wherein the aperture parameter is determined after a predefined or determined initial time in the period of time.

**11.** Method according to one of the preceding claims,
which has the following steps:

- generating the volume flow for a first period of time with the simulator valve (32) open, subsequently
- closing the simulator valve (32) for a second period of time with the pressure generator (5) deactivated, subsequently
- generating the volume flow for a third period of time with the simulator valve (32) open, and
- ascertaining leakage of the simulator valve (32) in the third period of time on the basis of a volume balance.

**12.** Method according to Claim 11,

- wherein the aperture parameter is determined in the first period of time and/or in the third period of time after charging of the simulator (3).

**13.** Method according to one of the preceding claims,

- wherein an aperture (41) is arranged in the breather hole (43) or downstream of the breather hole (43) in terms of flow.

**14.** Method according to any of the preceding claims,

- wherein a linear actuator is used as pressure generator (5).

**15.** Brake system for a motor vehicle, which brake system has the following:

- a master brake cylinder (2) with a breather hole (43),
- an electrically operated pressure generator (5),
- a simulator (3),
- a simulator valve (32), and
- a main line (22),
- wherein the master brake cylinder (2) is connected to the pressure generator (5) via the main line (22) and the simulator (3) is connected via the simulator valve (32) to the main line (22) between master brake cylinder (2) and pressure generator (5),
**characterized in that** the brake system furthermore has an electronic control device (65) which is configured for carrying out a method according to any of the preceding claims.


**Revendications**

**1.** Procédure de surveillance d'un système de freinage hydraulique pour un véhicule automobile,

- le système de freinage comprenant les éléments suivant :

  - un maître-cylindre de frein (2) avec au moins un trou de reniflard,
  - un générateur de pression (5) fonctionnant électriquement,
  - un simulateur (3),
  - une soupape de simulateur (32) et
  - une conduite principale (22),

- le maître-cylindre de frein (2) étant relié au générateur de pression (5) par l'intermédiaire de la conduite principale (22) et le simulateur (3) étant relié à la conduite principale (22) entre le maître-cylindre de frein (2) et le générateur de pression (5) par l'intermédiaire de la soupape de simulateur (32),

**caractérisé en ce que** le procédé comprend les étapes suivantes :

- la génération d'un débit volumique au moyen du générateur de pression (5), le débit volumique s'écoulant du générateur de pression (5) par l'intermédiaire de la conduite principale (22) vers le maître-cylindre de frein (2) et quittant celui-ci par l'intermédiaire du trou de reniflard (43),

- l'établissement d'un bilan volumique en tant que différence entre le volume, qui a été délivré dans la conduite principale (22) par le générateur de pression (5) jusqu'à un temps déterminé, moins un volume qui a quitté le maître-cylindre de frein (2) par l'intermédiaire du trou de reniflard (43) jusqu'au temps déterminé, et
- la détection d'un état du système de freinage sur la base du bilan volumique ou sur la base d'une évolution dans le temps du bilan volumique.

2. Procédé selon la revendication 1,

   - dans lequel le volume qui a été délivré par le générateur de pression (5) dans la conduite principale (22) jusqu'au temps déterminé est déterminé sur la base de données de fonctionnement du générateur de pression (5).

3. Procédé selon l'une quelconque des revendications précédentes,

   - dans lequel le volume qui a quitté le maître-cylindre de frein (2) par l'intermédiaire du trou de reniflard (43) jusqu'au temps déterminé est déterminé par intégration temporelle d'un flux sortant du débit volumique par le trou de reniflard (43).

4. Procédé selon la revendication 3,

   - dans lequel le flux sortant est déterminé sur la base d'un paramètre de diaphragme et d'une pression mesurée dans le système de freinage ou dans le maître-cylindre de frein (2).

5. Procédé selon la revendication 4,

   - dans lequel le flux sortant est déterminé

   en tant que produit du paramètre de diaphragme et de la racine carrée de la pression ; et/ou
   en tant que produit du paramètre de diaphragme et de la pression ; et/ou
   en tant que somme d'un produit d'un premier paramètre de diaphragme et de la pression d'une part et d'un produit d'un deuxième paramètre de diaphragme et de la racine carrée de la pression d'autre part.

6. Procédé selon l'une quelconque des revendications 4 ou 5,

   - dans lequel le paramètre de diaphragme est déterminé de manière itérative ; et/ou
   - dans lequel le paramètre de diaphragme est déterminé par un procédé d'estimation de paramètres, de telle sorte que le débit volumique et le flux de sortie sont égaux à l'état stationnaire.

7. Procédé selon la revendication 6,

   - dans lequel le paramètre de diaphragme est itéré de la manière suivante :

$$\hat{c}_k = \hat{c}_{k-1} + \mu \times \left( Q_k - \hat{c}_{k-1} \times \sqrt{P_k} \right)$$

   où :

   - est le paramètre de diaphragme pour l'étape d'itération k,
   - $\mu$ est un paramètre d'itération,
   - $Q_k$ est le débit volumique pour l'étape d'itération k, et
   - $P_k$ est la pression pour l'étape d'itération k.

8. Procédé selon l'une quelconque des revendications 6 ou 7,

   - dans lequel le paramètre de diaphragme est déterminé à pression constante et/ou à débit volumique constant.

9. Procédé selon l'une quelconque des revendications précédentes,

- dans lequel le débit volumique est généré en continu pendant une période de temps alors que la soupape de simulateur (32) est fermée ;
- dans lequel, sur la base d'un bilan volumique initial, un volume d'air dans le maître-cylindre de frein (2) est déterminé, et/ou
- dans lequel une fuite de la soupape de simulateur (32) est déterminée sur la base d'un bilan volumique au cours de la période de temps.

**10.** Procédé selon la revendication 9 ainsi que selon la revendication 4 ou une revendication dépendante de celle-ci,

- dans lequel le paramètre de diaphragme est déterminé après un temps initial prédéfini ou déterminé dans la période de temps.

**11.** Procédé selon l'une quelconque des revendications précédentes, qui comprend les étapes suivantes :

- la génération du débit volumique alors que la soupape de simulateur (32) est ouverte pendant une première période de temps, puis
- la fermeture de la soupape de simulateur (32) alors que le générateur de pression (5) est arrêté pendant une deuxième période de temps, puis
- la génération du débit volumique alors que la soupape de simulateur (32) est ouverte pendant une troisième période de temps, et
- la détermination d'une fuite de la soupape de simulateur (32) sur la base d'un bilan volumique dans la troisième période de temps.

**12.** Procédé selon la revendication 11,

- dans lequel le paramètre de diaphragme est déterminé dans la première période de temps et/ou dans la troisième période de temps après un chargement du simulateur (3).

**13.** Procédé selon l'une quelconque des revendications précédentes,

- dans lequel un diaphragme (41) est agencé dans le trou de reniflard (43) ou après le trou de reniflard (43) selon l'écoulement.

**14.** Procédé selon l'une quelconque des revendications précédentes,

- dans lequel un actionneur linéaire est utilisé en tant que générateur de pression (5).

**15.** Système de freinage pour un véhicule automobile, qui comprend les éléments suivants :

- un maître-cylindre de frein (2) avec un trou de reniflard (43),
- un générateur de pression (5) fonctionnant électriquement,
- un simulateur (3),
- une soupape de simulateur (32), et
- une conduite principale (22),
- le maître-cylindre de frein (2) étant relié au générateur de pression (5) par l'intermédiaire de la conduite principale (22) et le simulateur (3) étant relié à la conduite principale (22) entre le maître-cylindre de frein (2) et le générateur de pression (5) par l'intermédiaire de la soupape de simulateur (32),

**caractérisé en ce que** le système de freinage présente en outre un dispositif de commande électronique (65) qui est configuré pour mettre en oeuvre un procédé selon l'une quelconque des revendications précédentes.

Fig. 1

Fig. 2

Fig. 3

Fig. 4

EP 3 810 465 B1

Fig. 5

Fig. 6

EP 3 810 465 B1

**Fig. 7**

EP 3 810 465 B1

Fig. 8

**Fig. 9**

EP 3 810 465 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016222578 A1
- DE 102016112971 A1